# EUROPÄISCHE PATENTSCHRIFT

(11) **EP 2 768 871 B1**
(45) Veröffentlichungstag und Bekanntmachung des Hinweises auf die Patenterteilung: **30.09.2015**
(21) Anmeldenummer: 12769669.8
(22) Anmeldetag: 10.10.2012
(51) Int. Cl.: C08F 10/10, C08F 4/14

(54) **VERFAHREN ZUR HERSTELLUNG VON ISOBUTENHOMO- ODER -COPOLYMEREN**
METHOD FOR PRODUCING ISOBUTENE HOMO- OR COPOLYMERS
PROCÉDÉ DE PRODUCTION D'HOMOPOLYMÈRES OU DE COPOLYMÈRES D'ISOBUTÈNE

(30) Priorität: 21.10.2011 EP 11186127
(43) Veröffentlichungstag der Anmeldung: 27.08.2014
(73) Patentinhaber: BASF SE, 67056 Ludwigshafen (DE)
(72) Erfinder: KÖNIG, Hannah, Maria, 68161 Mannheim (DE); URBAN, Rainer, 67069 Ludwigshafen (DE); MÜHLBACH, Klaus, 67269 Grünstadt (DE); WETTLING, Thomas, 67117 Limburgerhof (DE); RACHWALSKY, Uwe, 67071 Ludwigshafen (DE); HIRSCH, Stefan, 67435 Neustadt (DE); BERG, Anne, 69207 Sandhausen (DE); MACH, Helmut, 69115 Heidelberg (DE)
(86) Internationale Anmeldenummer: PCT/EP2012/069995
(87) Internationale Veröffentlichungsnummer: WO 2013/057011

(56) Entgegenhaltungen:
- WO-A1-2005/066222
- WO-A1-2005/066222
- WO-A1-2011/101281
- DE-A1- 2 061 289
- DE-A1- 10 028 585
- DE-A1-102005 055 818

## Beschreibung

Die vorliegende Erfindung betrifft ein verbessertes Verfahren zur Herstellung von Isobutenhomo- oder -copolymeren mit einem zahlenmittleren Molekulargewicht von 500 bis 5.000.000 durch Polymerisation von Isobuten oder eines Isobuten enthaltenden Monomerengemisches in Gegenwart eines Bortrihalogenids oder eines ein Bortrihalogenid enthaltenden Komplexes als Polymerisationskatalysator.

Weiterhin betrifft die Vorliegende Erfindung die Verwendung von bestimmten Halbacetalen oder Vollacetalen bei der Polymerisation von Isobuten oder eines Isobuten enthaltenden Monomerengemisches zur Verbesserung der Produktqualität von Isobutenhomo- oder -copolymeren mit einem zahlenmittleren Molekulargewicht von 500 bis 5.000.000, insbesondere wird eine Verringerung der Verfärbungsneigung der erhaltenen Polymerisate bewirkt.

Isobuten oder Isobuten enthaltende Monomerengemische werden bekanntermaßen mit Hilfe von Lewis-Säuren oder Lewis-Säuren enthaltenden Komplexen als Katalysatoren zu Isobutenhomo- oder -copolymeren polymerisiert. Als geeignete Lewis-Säuren werden oftmals Friedel-Crafts-Katalysatoren wie Bortrifluorid oder Aluminiumtrichlorid eingesetzt. Die Polymerisation wird meist in flüssiger Phase unter Mitverwendung von Lösungs- oder Verdünnungsmitteln durchgeführt. Dabei können auch die Reaktionsgeschwindigkeit und damit das Molekulargewicht beeinflussende Verbindungen wie Beschleuniger und/oder Abbruchreagentien mitverwendet werden.

Die Produktqualität der gemäß den Verfahren des Stand der Technik erhaltenen Isobutenhomo- und -copolymeren ist jedoch noch verbesserungsbedürftig. So sind sie in ihrer Molekulargewichtsverteilung meist zu uneinheitlich und weisen ein zu breite Verteilung auf. Weiterhin enthalten diese Polymerisate noch zu viele Verunreinigungen. Insbesondere neigen sie nach ihrer Herstellung bei der Aufarbeitung und/oder bei der Lagerung zu Verfärbungen, d.h. sie dunkeln nach und nehmen dabei oftmals eine schmutzig-gelbliche bis bräunliche Färbung an.

Aufgabe der vorliegenden Erfindung war es, ein Verfahren zur Herstellung von Isobutenhomo- oder -copolymeren bereitzustellen, das die beschriebenen Nachteile des Standes der Technik nicht mehr aufweist.

Demgemäß wurde das eingangs definierte Verfahren gefunden, welches dadurch gekennzeichnet ist, dass man die Polymerisation in Gegenwart mindestens eines Halbacetals oder Vollacetals durchführt, welches durch Protonensäure-katalysierte Umsetzung wenigstens eines C₁- bis C₁₂-Hydrocarbylalkohols mit wenigstens einem Aldehyd oder Keton mit 1 bis 6 Kohlenstoffatomen erhältlich ist.

Vorzugsweise verwendet man das mindestens eine Halbacetal oder Vollacetal in einer Menge von 10 bis 5000 Gew.-ppm, insbesondere von 25 bis 2500 Gew.-ppm, vor allem von 50 bis 1000 Gew.-ppm, jeweils bezogen auf das bei der Polymerisation eingesetzte Isobuten.

Die erfindungsgemäß eingesetzten Halbacetale sind durch Umsetzung äquimolarer Mengen an Hydrocarbylalkohol und Aldehyd bzw. Keton erhältlich. Die erfindungsgemäß eingesetzten Vollacetale sind durch Umsetzung von einem Äquivalent Hydrocarbylalkohol mit zwei Äquivalenten Aldehyd bzw. Keton erhältlich. Es können auch Mischungen aus Halbacetalen und Vollacetalen eingesetzt werden. Die entsprechenden Halbacetale und Vollacetale stehen in der Regel miteinander im chemischen Gleichgewicht.

Zur Ausbildung von Halbacetalen und Vollacetalen aus Hydrocarbylalkoholen und Aldehyden bzw. Ketonen ist die Anwesenheit von Protonensäuren erforderlich, welche die Anlagerung des Alkohol-Sauerstoffatoms an die Carbonylfunktion zum Halbacetal und im zweiten Schritt die Anlagerung des zweiten Alkoholmoleküls und die Wasserabspaltung unter Ausbildung des Vollacetals erst ermöglicht. Es genügen übliche katalytische Mengen an Protonensäuren. Typische Protonensäuren sind hier anorganische Säuren wie Salzsäure oder verdünnte Schwefelsäure oder organische Säuren wie Carbonsäuren, beispielsweise Essigsäure, Trichloressigsäure oder Trifluoressigsäure, oder Sulfonsäuren, beispielsweise Methansulfonsäure oder Toluolsulfonsäure.

In der Deutschen Offenlegungschrift 2 061 289 wird ein Verfahren zur Polymerisation von Isobutylen mittels Friedel-Crafts-Katalysatoren wie Bortrifluorid beschrieben, bei dem man in Gegenwart einer Lösung von Formaldehyd in Alkoholen arbeitet. Hierdurch soll eine bessere Regelung des Molekulargewichtes des erhaltenen Polyisobutylens ermöglicht werden. Da die DE-OS 2 061 289 nicht die Anwesenheit von Protonensäuren erwähnt, ist davon auszugehen, dass sich aus dem Formaldehyd und den Alkoholen keine Halb- oder Vollacetale bilden; es liegt hier eine rein physikalische Lösung von Formaldehyd in Alkoholen vor.

Unter C₁- bis C₁₂-Hydrocarbylalkoholen sind organische Verbindungen mit insgesamt bis zu 12 Kohlenstoffatomen, die eine oder mehrere, insbesondere eine, zwei oder drei an sp³-hydridisierte Kohlenstoffatome gebundene Hydroxylgruppen tragen, zu verstehen. Abgesehen von den Hydroxylgruppen weisen diese organischen Verbindungen überwiegend Kohlenwasserstoffcharakter auf, können aber in geringem Umfang Heteroatome wie Stickstoff oder Sauerstoff oder weitere funktionelle Gruppen, die inert gegenüber Aldehyden und Ketonen sind, enthalten.

Vorzugsweise weisen diese C₁- bis C₁₂-Hydrocarbylalkohole nur eine Hydroxylgruppe pro Molekül auf. Insbesondere eignen sich hierbei lineare oder verzweigte C₁- bis C₁₂-Alkanole, vor allem lineare oder verzweigte C₁- bis C₆-Alkanole, C₅- bis C₁₂-Cycloalkanole sowie C₇- bis C₁₂-Arylalkanole. Typische Beispiele solcher Verbindungen sind Methanol, Ethanol, n-Propanol, iso-Propanol, n-Butanol, iso-Butanol, sec.-Butanol, tert.-Butanol, n-Pentanol, sec.-Pentanol, tert.-Pentanol, n-Hexanol, n-Heptanol, n-Octanol, 2-Ethylhexanol, n-Nonanol, n-Decanol, 2-Propylheptanol, n- Undecanol, n-Dodecanol, Cyclopentanol, Cyclohexanol, 2-, 3- oder 4-Methylcyclohexanol, Cycloheptanol, Benzylalkohol, 1- oder 2-Phenylethanol, 1-, 2- oder 3-Phenylpropanol, 1-, 2-, 3-oder 4-Phenylbutanol, (o-, m- oder p-Methylphenyl)-methanol, 1,2-Ethylenglykol, 1,3-Propylenglykol, 1,2,3-Propantriol (Glycerin), 1,2-Ethylenglykol-monomethylether, 1,2-Ethylenglykol-monoethylether, 1,3-Propylenglykol-monomethylether und 1,3-Propylenglykol-monoethylether. Es können auch Mischungen aus verschiedenen solcher C₁- bis C₁₂-Hydrocarbylalkoholen eingesetzt werden.

Besonders bevorzugt werden als C₁- bis C₁₂-Hydrocarbylalkohole verzweigte und insbesondere lineare C₁- bis C₁₂-Alkanole, vor allem verzweigte und insbesondere lineare C₁- bis C₆-Alkanole.

Aldehyde und Ketone mit 1 bis 12 Kohlenstoffatomen können aliphatischer, cycloaliphatischer oder aromatischer Natur sein. Sie enthalten in der Regel neben der Aldehyd- bzw. Ketonfunktion ein reines Kohlenwasserstoffgerüst und weisen somit überwiegend Kohlenwasserstoffcharakter auf. Sie können aber in geringem Umfang Heteroatome wie Stickstoff oder Sauerstoff oder weitere funktionelle Gruppen, die inert gegenüber Hydroxylgruppen sind, enthalten.

Typische Bespiele für solche Aldehyde und Ketone sind Formaldehyd, Acetaldehyd, Propionaldehyd, Butyraldehyd, n-Pentanal, n-Hexanal, n-Octanal, n-Decanal, n-Dodecanal, Cyclopentylcarbaldehyd, Cyclohexylcarbaldehyld, Benzaldehyd, Phenylacetaldehyd, 2- oder 3-Phenylpropionaldehyd, 2-, 3- oder 4-Phenylbutyraldehyd, Aceton, Butanon, 2- oder 3-Pentanon, Cyclopentanon, Cyclohexanon und Acetophenon. Es können auch Mischungen aus verschiedenen solcher Aldehyde oder aus verschiedenen solcher Ketone eingesetzt werden.

Besonders bevorzugt werden als Aldehyde und Ketone mit 1 bis 12 Kohlenstoffatomen Aldehyde und Ketone mit 1 bis 4 Kohlenstoffatomen, vor allem Aldehyde mit 1 bis 4 Kohlenstoffatomen. Ganz besonders bevorzugt ist Formaldehyd, welches in monomerer Form, beispielsweise in Form seiner konzentrierten wässrigen Lösung, oder auch als Trioxan oder als Paraformaldehyd zur Protonensäure-katalysierten Umsetzung mit wenigstens einem C₁- bis C₁₂-Hydrocarbylalkohol zu den Halbacetalen oder Vollacetelen eingesetzt werden kann.

In einer bevorzugten Ausführungsform der vorliegenden Erfindung führt man die Polymerisation von Isobuten oder eines Isobuten enthaltenden Monomerengemisches in Gegenwart mindestens eines Halbacetals oder Vollacetals durch, welches durch Protonensäure-katalysierte Umsetzung wenigstens eines linearen C₁- bis C₆-Alkanols mit wenigstens einem Aldehyd mit 1 bis 4 Kohlenstoffatomen, insbesondere mit Formaldehyd, erhältlich ist.

Die Struktur derartiger Halbacetale und Vollacetale kann üblicherweise durch die nachfolgende allgemeine Formel (I) wiedergegeben werden: 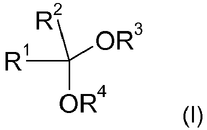 in der
die Variablen R¹ und R² unabhängig voneinander für Wasserstoff, C₁- bis C₁₂-Alkylreste, C₅- bis C₁₂-Cycloalkylreste oder C₇- bis C₁₂-Arylalkylreste stehen, wobei die beiden Variablen R¹ und R² auch einen Cyclus bilden können und wobei die Summe der Kohlenstoffatome in den beiden Variablen R¹ und R² 1 bis 12 betragen muss,
die Variable R³ Wasserstoff oder einen C₁- bis C₁₂-Alkylrest, einen C₅- bis C,₂-Cycloalkylrest oder einen C₇- bis C₁₂-Arylalkylrest bedeutet und
die Variable R⁴ einen C₁- bis C₁₂-Alkylrest, einen C₅- bis C₁₂-Cycloalkylrest oder einen C₇- bis C₁₂-Arylalkylrest bezeichnet.

Typische Einzelbeispiele für derartige Halbacetale und Vollacetale sind das Halbacetal aus Methanol und Formaldehyd, das Vollacetal aus Methanol und Formaldehyd, das Halbacetal aus Ethanol und Formaldehyd, das Vollacetal aus Ethanol und Formaldehyd, das Halbacetal aus n-Propanol und Formaldehyd, das Vollacetal aus n-Propanol und Formaldehyd, das Halbacetal aus n-Butanol und Formaldehyd, das Vollacetal aus n-Butanol und Formaldehyd, das Halbacetal aus Methanol und Acetaldehyd, das Vollacetal aus Methanol und Acetaldehyd, das Halbacetal aus Ethanol und Acetaldehyd, das Vollacetal aus Ethanol und Acetaldehyd, das Halbacetal aus n-Propanol und Acetaldehyd, das Vollacetal aus n-Propanol und Acetaldehyd, das Halbacetal aus n-Butanol und Acetaldehyd und das Vollacetal aus n-Butanol und Acetaldehyd.

Als Polymersationskatalysatoren werden heterogene oder insbesondere homogene Katalysatoren aus der Klasse der Lewis-Säuren eingesetzt. Lewis-Säuren sind an ihrem Zentralatom elektronendefiziente Verbindungen und leiten daraus ihre katalytische Aktivität her. Insbesondere handelt es sich bei diesen Lewis-Säuren um Verbindungen von Elementen der 3. Hauptgruppe des Periodensystems, also von Bor, Aluminum, Indium, Gallium und Thallium. Jedoch können auch Halogenide, insbesondere Chloride, des Zinns, des Titans, des Antimons oder des Eisens, beispielsweise Eisen(III)-chlorid, eingesetzt werden. Derartige Lewis-Säuren werden oft auch als Friedel-Crafts-Katalysatoren bezeichnet.

Besonders bevorzugt als Polymerisationskatalysatoren werden Bor- und AluminiumVerbindungen, insbesondere Bor- und Aluminiumhalogenide, beispielsweise wasserfreies Aluminiumchlorid, Bortrichlorid, Bortrifluorid, Bortribromid, Bortrijodid und insbesondere Bortrihalogenid-Komplexe mit Aktivatoren wie Bortrifluorid-Etherate, z. B. Bortrifluorid-Diethyletherat, oder Bortrifluorid-Alkohol-Komplexe. Verwendet man Borhalogenide, insbesondere Bortrifluorid, ist die Verwendung der zusätzlichen Aktivatoren in den genannten Komplexen empfehlenswert. Ein besonders bevorzugter Aktivator für Bortrifluorid ist hierbei ein Alkohol, insbesondere ein C₁- bis C₄-Alkanol, z. B. Methanol, Ethanol, Isopropanol, Isobutanol oder sec.-Butanol.

Die zu verwendende Menge an Polymerisationskatalysator richtet sich im Wesentlichen nach der Art des Katalysators und nach den Reaktionsbedingungen, insbesondere der Reaktionstemperatur und dem angestrebten Molekulargewicht des Polymeren. Sie kann anhand weniger Stichversuche für das jeweilige Reaktionssystem ermittelt werden. Im Allgemeinen wird der Polymerisationskatalysator - also die Lewis-Säure oder der eine Lewis-Säure enthaltende Komplex - in Mengen von 0,0001 bis 1 Gew.-%, insbesondere 0,0005 bis 0,1 Gew.-%, vor allem 0,001 bis 0,01 Gew.-%, jeweils bezogen auf eingesetztes Isobuten, verwendet.

Neben der Lewis-Säure bzw. dem die Lewis-Säure enthaltenden Komplex als Polymerisationskatalysator kann das Polymerisationsmedium auch die Reaktionsgeschwindigkeit und damit das Molekulargewicht der zu bildenden Polymerisate beeinflussende Verbindungen wie Beschleuniger und/oder Abbruchreagentien enthalten. Gemäß der Lehre der DE-OS 2 061 289 werden Alkohole, Phenole, Mineralsäuren und Carbonsäuren als derartige Beschleuniger eingesetzt, welche neben einer Beschleunigung des Reaktionsablaufes höhere Molekulargewichte sowie eine Verringerung der Katalysatormenge bewirken sollen. Aus der DE-OS 2 061 289 und der WO 2005/066222 A1 bekannte Abbruchreagentien, welche die Propagation des Polymerkettenwachstums unterdrücken, sind Diisobutylen, Mercaptane, Sulfide, Polysulfide, Cyanwasserstoff, Cyanide und Nitrile.

Unter Isobutenhomopolymeren versteht man im Rahmen der vorliegenden Erfindung solche Polymere, die bezogen auf das Polymer zu wenigstens 98 Mol-%, vorzugsweise zu wenigstens 99 Mol-% aus Isobuten aufgebaut sind. Dementsprechend versteht man unter Isobutencopolymeren solche Polymere, die mehr als 2 Mol-% Monomere einpolymerisiert enthalten, die von Isobuten verschieden sind, beispielsweise lineare Butene.

Vorzugsweise besitzen die mit dem erfindungsgemäßen Verfahren hergestellten Isobutenhomo- und -copolymere ein zahlenmittleres Molekulargewicht Mₙ (bestimmt durch Gelpermeationschromatographie) von 1000 bis 2.500.000, insbesondere von 5.000 bis 1.250.000, vor allem von 10.000 bis 750.000.

In der Regel weisen die mit dem erfindungsgemäßen Verfahren hergestellten Isobutenhomo- und -copolymere eine Polydispersität (PDI = Quotient aus gewichtsgemitteltem und zahlenmittlerem Molekulargewicht M_{w}/Mₙ) von 1 bis 20, insbesondere von 1 bis 10, vor allem von 1 bis 5 auf.

Für den Einsatz von Isobuten oder eines Isobuten enthaltenden Monomerengemisches als zu polymerisierendem Monomer eignet sich als Isobuten-Quelle sowohl Rein-Isobuten als auch Isobuten-haltige C₄-Kohlenwasserstoffströme, beispielsweise C₄-Raffinate, insbesondere "Raffinat 1 ", C₄-Schnitte aus der Isobutan-Dehydrierung, C₄-Schnitte aus Steamcrackern und aus FCC-Crackern (fluid catalysed cracking), sofern sie weitgehend von darin enthaltenem 1,3-Butadien befreit sind. Ein C₄-Kohlenwasserstoffstrom aus einer FCC-Raffinerieeinheit ist auch als "b/b"-Strom bekannt. Weitere geeignete Isobuten-haltige C₄-Kohlenwasserstoffströme sind beispielsweise der Produktstrom einer Propylen-Isobutan-Cooxidation oder der Produktstrom aus einer Metathese-Einheit, welche in der Regel nach üblicher Aufreinigung und/oder Aufkonzentrierung eingesetzt werden. Geeignete C₄-Kohlenwasserstoffströme enthalten in der Regel weniger als 500 ppm, vorzugsweise weniger als 200 ppm, Butadien. Die Anwesenheit von 1-Buten sowie von cis- und trans-2-Buten ist weitgehend unkritisch. Typischerweise liegt die Isobutenkonzentration in den genannten C₄-Kohlenwasserstoffströmen im Bereich von 40 bis 60 Gew.-%. So besteht Raffinat 1 in der Regel im wesentlichen aus 30 bis 50 Gew.-% Isobuten, 10 bis 50 Gew.-% 1-Buten, 10 bis 40 Gew.-% cis- und trans-2-Buten sowie 2 bis 35 Gew.-% Butanen; beim erfindungsgemäßen Polymerisationsverfahren verhalten sich die unverzeigten Butene im Raffinat 1 in der Regel praktisch inert und nur das Isobuten wird polymerisiert.

In einer Ausführungsform setzt man als Monomerquelle für die Polymerisation einen technischen C₄-Kohlenwasserstoffstrom mit einem Isobuten-Gehalt von 1 bis 100 Gew.-%, insbesondere von 1 bis 99 Gew.-%, vor allem von 1 bis 90 Gew.-%, besonders bevorzugt von 30 bis 60 Gew.-%, insbesondere einen Raffinat 1-Strom, einen b/b-Strom aus einer FCC-Raffinerieeinheit, einen Produktstrom einer Propylen-Isobutan-Cooxidation oder einen Produktstrom aus einer Metathese-Einheit ein.

Das genannte Isobuten-haltige Monomerengemisch kann geringe Mengen an Kontaminanten wie Wasser, Carbonsäuren oder Mineralsäuren enthalten, ohne dass es zu kritischen Ausbeute- oder Selektivitätseinbußen kommt. Es ist zweckdienlich, eine Anreicherung dieser Verunreinigungen zu vermeiden, indem man solche Schadstoffe beispielsweise durch Adsorption an feste Adsorbentien wie Aktivkohle, Molekularsiebe oder Ionenaustauscher, aus dem Isobuten-haltigen Monomerengemisch entfernt.

Es können auch Monomermischungen von Isobuten beziehungsweise des Isobuten-haltigen Kohlenwasserstoffgemischs mit olefinisch ungesättigten Monomeren, welche mit Isobuten copolymerisierbar sind, umgesetzt werden. Sofern Monomermischungen des Isobutens mit geeigneten Comonomeren copolymerisiert werden sollen, enthält die Monomermischung vorzugsweise wenigstens 5 Gew.-%, besonders bevorzugt wenigstens 10 Gew.-% und insbesondere wenigstens 20 Gew.-% Isobuten, und vorzugsweise höchstens 95 Gew.-%, besonders bevorzugt höchstens 90 Gew.-% und insbesondere höchstens 80 Gew.-% Comonomere.

Als copolymerisierbare Monomere kommen in Betracht: Vinylaromaten wie Styrol und α-Methylstyrol, C₁- bis C₄-Alkylstyrole wie 2-, 3- und 4-Methylstyrol und 4-tert.-Butylstyrol, Halogenstyrole wie 2-, 3- oder 4-Chlorstyrol sowie Isoolefine mit 5 bis 10 Kohlenstoffatomen wie 2-Methylbuten-1, 2-Methylpenten-1, 2-Methylhexen-1, 2-Ethylpenten-1, 2-Ethylhexen-1 und 2-Propylhepten-1. Als Comonomere kommen weiterhin Olefine in Betracht, die eine Silylgruppe aufweisen, wie 1-Trimethoxysilylethen, 1-(Trimethoxysilyl)propen, 1-(Trimethoxysilyl)-2-methylpropen-2, 1-[Tri(methoxyethoxy)silyl]-ethen, 1-[Tri(methoxyethoxy)silyl]propen, und 1-[Tri(meth-oxyethoxy)silyl]-2-methylpropen-2. Weiterhin kommen - abhängig von den Polymerisationsbedingungen - als Comonomere auch 1-Buten und cis- und trans-2-Buten in Betracht.

Sollen mit dem erfindungsgemäßen Verfahren Copolymere hergestellt werden, so kann das Verfahren so ausgestaltet werden, dass bevorzugt statistische Polymere oder bevorzugt Blockcoplymere entstehen. Zur Herstellung von Blockcopolymeren kann man beispielsweise die verschiedenen Monomere nacheinander der Polymerisationsreaktion zuführen, wobei die Zugabe des zweiten Comonomers insbesondere erst dann erfolgt, wenn das erste Comonomer zumindest teilweise schon polymerisiert ist. Auf diese Weise sind sowohl Diblock-, Triblock- als auch höhere Blockcopolymere zugänglich, die je nach Reihenfolge der Monomerzugabe einen Block des einen oder anderen Comonomers als terminalen Block aufweisen. Blockcopolymere entstehen in einigen Fällen aber auch dann, wenn alle Comonomere zwar gleichzeitig der Polymerisationsreaktion zugeführt werden, eines davon aber signifikant schneller polymerisiert als das oder die anderen. Dies ist insbesondere dann der Fall, wenn Isobuten und eine vinylaromatische Verbindung, insbesondere Styrol, im erfindungsgemäßen Verfahren copolymerisiert werden. Dabei entstehen vorzugsweise Blockcopolymere mit einem terminalen Polystyrolblock. Dies ist darauf zurückzuführen, dass die vinylaromatische Verbindung, speziell Styrol, signifikant langsamer polymerisiert als Isobuten.

Die Polymerisation kann sowohl kontinuierlich als auch diskontinuierlich erfolgen. Kontinuierliche Verfahren können in Analogie zu bekannten Verfahren des Standes der Technik zur kontinuierlichen Polymerisation von Isobuten in Gegenwart von Bortrifluorid-basierten Katalysatoren in flüssiger Phase durchgeführt werden. Geeignete Reaktortypen für das Polymerisationsverfahren der vorliegenden Erfindung sind üblicherweise Rührkesselreaktoren, Schlaufenreaktoren und Rohrreaktoren, aber auch Wirbelbettreaktoren, Wirbelschichtreaktoren, Rührtankreaktoren mit und ohne Lösungsmittel, Flüssigbettreaktoren, kontinuierliche Festbettreaktoren und diskontinuierliche Festbettreaktoren (batch-Fahrweise).

Das erfindungsgemäße Verfahren ist sowohl für eine Durchführung bei niedrigen Temperaturen, z.B. bei -90°C bis 0°C, als auch bei höheren Temperaturen, d.h. bei wenigstens 0°C, z.B. bei 0°C bis +30°C oder bei 0°C bis +50°C, geeignet. Die Polymerisation gemäß dem erfindungsgemäßen Verfahren wird vorzugsweise jedoch bei niedrigeren Temperaturen, in der Regel bei -70°C bis -10°C, insbesondere bei -60°C bis -15°C, durchgeführt.

Erfolgt die Polymerisation gemäß dem erfindungsgemäßen Verfahren bei oder oberhalb der Siedetemperatur des zu polymerisierende Monomers oder Monomerengemisches, so wird sie vorzugsweise in Druckgefäßen, beispielsweise in Autoklaven oder in Druckreaktoren, durchgeführt.

Vorzugsweise wird die Polymerisation gemäß dem erfindungsgemäßen Verfahren in Gegenwart eines inerten Verdünnungsmittels durchgeführt. Das verwendete inerte Verdünnungsmittel sollte geeignet sein, die während der Polymerisationsreaktion in der Regel auftretende Erhöhung der Viskosität der Reaktionslösung soweit zu verringern, dass die Abführung der entstehenden Reaktionswärme gewährleistet werden kann. Als Verdünnungsmittel sind solche Lösungsmittel oder Lösungsmittelgemische geeignet, die gegenüber den eingesetzten Reagenzien inert sind. Geeignete Verdünnungsmittel sind beispielsweise aliphatische Kohlenwasserstoffe wie n-Butan, n-Pentan, n-Hexan, n-Heptan, n-Octan und Isooctan, cycloaliphatische Kohlenwasserstoffe wie Cyclopentan und Cyclohexan, aromatische Kohlenwasserstoffe wie Benzol, Toluol und die Xylole, und halogenierte Kohlenwasserstoffe, insbesondere halogenierte aliphatische Kohlenwasserstoffe wie Methylchlorid, Dichlormethan, Trichlormethan (Chloroform), 1,1-Dichlorethan, 1,2-Dichlorethan, Trichlorethan und 1-Chlorbutan sowie halogenierte aromatische Kohlenwasserstoffe und in den Alkylseitenketten halogenierte Alkylaromaten wie Chlorbenzol, Monofluormethylbenzol, Difluormethylbenzol und Trifluormethylbenzol, sowie Mischungen der vorgenannten Verdünnungsmittel. Als Verdünnungsmittel oder als Bestandteile der genannten Lösungsmittelgemische dienen auch die inerten Anteile von Isobuten-haltigen C₄-Kohlenwasserstoffströmen.

Vorzugsweise führt man die erfindungsgemäße Polymerisation in einem halogenierten Kohlenwasserstoff, insbesondere in einem halogenierten aliphatischen Kohlenwasserstoff, oder in einer Mischung aus halogenierten Kohlenwasserstoffen, insbesondere aus halogenierten aliphatischen Kohlenwasserstoffen, oder in einem Gemisch aus mindestens einem halogenierten Kohlenwasserstoff, insbesondere einen halogenierten aliphatischen Kohlenwasserstoff, und mindestens einem aliphatischen, cycloaliphatischen oder aromatischen Kohlenwasserstoff als inertem Verdünnungsmittel durch, beispielsweise ein Gemisch aus Dichlormethan und n-Hexan, üblicherweise im Vol.-Verhältnis von 10:90 bis 90:10, insbesondere von 50:50 bis 85:15. Vorzugsweise werden die Verdünnungsmittel vor ihrem Einsatz von Verunreinigungen wie Wasser, Carbonsäuren oder Mineralsäuren befreit, beispielsweise durch Adsorption an feste Adsorbentien wie Aktivkohle, Molekularsiebe oder Ionenaustauscher.

In einer weiteren bevorzugten Ausführungsform führt man die erfindungsgemäße Polymerisation in halogenfreien aliphatischen oder insbesondere halogenfreien aromatischen Kohlenwasserstoffen, insbesondere Toluol, durch.

Vorzugsweise wird die Polymerisation gemäß dem erfindungsgemäßen Verfahren unter weitgehend aprotischen, insbesondere unter weitgehend wasserfreien Reaktionsbedingungen durchgeführt. Unter weitgehend aprotischen beziehungsweise weitgehend wasserfreien Reaktionsbedingungen versteht man, dass der Wassergehalt (bzw. der Gehalt an protischen Verunreinigungen) im Reaktionsgemisch weniger als 50 ppm und insbesondere weniger als 5 ppm beträgt. In der Regel wird man daher die Einsatzstoffe vor ihrer Verwendung durch physikalische und/oder durch chemische Maßnahmen trocknen. Insbesondere hat es sich bewährt, die als Lösungsmittel eingesetzten aliphatischen oder cycloaliphatischen Kohlenwasserstoffe nach üblicher Vorreinigung und Vortrocknung mit einer metallorganischen Verbindung, beispielsweise einer Organolithium-, Organomagnesium- oder Organoaluminium-Verbindung, in einer Menge zu versetzen, die ausreicht, um die Wasserspuren aus dem Lösungsmittel weitgehend zu entfernen. Das so behandelte Lösungsmittel wird dann vorzugsweise direkt in das Reaktionsgefäß einkondensiert. In ähnlicher Weise kann man auch mit den zu polymerisierenden Monomeren, insbesondere mit Isobuten oder mit den Isobuten-haltigen Mischungen verfahren. Auch die Trocknung mit anderen üblichen Trockenmitteln wie Molekularsieben oder vorgetrockneten Oxiden wie Aluminiumoxid, Siliciumdioxid, Calciumoxid oder Bariumoxid, ist geeignet. Die halogenierten Lösungsmittel, für die eine Trocknung mit Metallen wie Natrium oder Kalium oder mit Metallalkylen nicht in Betracht kommt, werden mit dafür geeigneten Trocknungsmitteln, beispielsweise mit Calciumchlorid, Phosphorpentoxid oder Molekularsieb, von Wasser oder Wasserspuren befreit. In analoger Weise kann man auch diejenigen Einsatzstoffe trocknen, für die eine Behandlung mit Metallalkylen ebenfalls nicht in Betracht kommt, beispielsweise vinylaromatische Verbindungen.

Zum Reaktionsabbruch ("Quentschen") wird das Reaktionsgemisch vorzugsweise desaktiviert, beispielsweise durch Zugabe einer protischen Verbindung, insbesondere durch Zugabe von Wasser, Alkoholen, wie Methanol, Ethanol, n-Propanol und Isopropanol oder deren Gemische mit Wasser, oder durch Zugabe einer wässrigen Base, z.B. einer wässrigen Lösung eines Alkali- oder Erdalkalihydroxids wie Natriumhydroxid, Kaliumhydroxid, Magnesiumhydroxid oder Calciumhydroxid, eines Alkali- oder Erdalkalicarbonats wie Natrium-, Kalium-, Magnesium- oder Calciumcarbonat, oder eines Alkali- oder Erdalkalihydrogencarbonats wie Natrium-, Kalium-, Magnesium- oder Calciumhydrogencarbonat.

Wenn die durch das erfindungsgemäße Verfahren zu erzielenden zahlenmittleren Molekulargewichte der Isobutenhomo- und -copolymeren im unteren Bereich - also etwa bis zu einem Mₙ von 10.000 - liegen, können so hochreaktive Isobutenhomo- und -copolymere mit einem Gehalt an terminalen Vinyliden-Doppelbindungen (α-Doppelbindungen) pro Polyisobuten-Kettenende von wenigstens 50 Mol-%, vorzugsweise von wenigstens 60 Mol-%, vorzugsweise von wenigstens 70 Mol-%, vorzugsweise von wenigstens 80 Mol-%, vorzugsweise von wenigstens 85 Mol-%, besonders bevorzugt von wenigstens 90 Mol-% und insbesondere von wenigstens 95 Mol-%, z.B. von nahezu 100 Mol-%, erhalten werden. Insbesondere dient es auch zur Herstellung von hochreaktiven Isobuten-Copolymeren, die aus Isobuten und wenigstens einem vinylaromatische Monomer, insbesondere Styrol, aufgebaut sind, und einem Gehalt an terminalen Vinyliden-Doppelbindungen (α-Doppelbindungen) pro Polyisobuten-Kettenende von wenigstens 50 Mol-%, vorzugsweise von wenigstens 60 Mol-%, vorzugsweise von wenigstens 70 Mol-%, vorzugsweise von wenigstens 80 Mol-%, vorzugsweise von wenigstens 80 Mol-%, vorzugsweise von wenigstens 85 Mol-%, besonders bevorzugt von wenigstens 90 Mol-% und insbesondere von wenigstens 95 Mol-%, z.B. von nahezu 100 Mol-%, aufweisen. Zur Herstellung solcher Copolymeren aus Isobuten und wenigstens einem vinylaromatischen Monomer, insbesondere Styrol, wird Isobuten oder ein Isobuten-haltiger Kohlenwasserstoffschnitt mit dem wenigstens einem vinylaromatischen Monomer in einem Gew.-Verhältnis Isobuten zu Vinylaromat von 5 bis 95 zu 95 bis 5, insbesondere von 30 bis 70 zu 70 bis 30, copolymerisiert.

Vorzugsweise weisen die mit dem erfindungsgemäßen Verfahren hergestellten hochreaktiven Isobutenhomo- oder -copolymere und speziell die Isobutenhomopolymere eine Polydispersität (PDI = M_{w}/Mₙ) von 1,05 bis 5, vorzugsweise von 1,05 bis 3 und insbesondere von 1,1 bis 2 auf.

Vorzugsweise besitzen die mit dem erfindungsgemäßen Verfahren hergestellten hochreaktiven Isobutenhomo- oder -copolymere ein zahlenmittleres Molekulargewicht Mₙ (bestimmt durch Gelpermeationschromatographie) von vorzugsweise 500 bis 10.000, insbesondere von 700 bis 5000 und vor allem von 900 bis 2500.

Gegenstand der vorliegende Erfindung ist auch die Verwendung von Halbacetalen oder Vollacetalen, welche durch Protonensäure-katalysierte Umsetzung wenigstens eines C₁- bis C₁₂-Hydrocarbylalkohols mit wenigstens einem Aldehyd oder Keton mit 1 bis 6 Kohlenstoffatomen erhältlich sind, bei der Polymerisation von Isobuten oder eines Isobuten enthaltenden Monomerengemisches in Gegenwart einer Lewis-Säure oder eines eine Lewis-Säure enthaltenden Komplexes als Polymerisationskatalysator zur Verbesserung der Produktqualität der erhaltenen Isobutenhomo- oder -copolymere mit einem zahlenmittleren Molekulargewicht von 500 bis 5.000.000.

In einer bevorzugten Ausführungsform werden diese Halbacetale oder Vollacetale zur Verringerung der Verfärbungsneigung der erhaltenen Isobutenhomo- oder -copolymere verwendet.

Durch das erfindungsgemäße Verfahren können nieder-, mittel- und hochmolekulare Isobutenhomo- und -copolymere mit einheitlicherer und engerer Molekulargewichtsverteilung in hohen Ausbeuten und Reinheiten hergestellt werden. Diese Polymerisate enthalten weniger Verunreinigungen. Insbesondere neigen sie nach ihrer Herstellung bei der Aufarbeitung und/oder bei der Lagerung nicht mehr in so starkem Maße zu Verfärbungen.

## Patentansprüche

1. Verfahren zur Herstellung von Isobutenhomo- oder -copolymeren mit einem zahlenmittleren Molekulargewicht von 500 bis 5.000.000 durch Polymerisation von Isobuten oder eines Isobuten enthaltenden Monomerengemisches in Gegenwart eines Bortrihalogenids oder eines ein Bortrihalogenid enthaltenden Komplexes als Polymerisationskatalysator, **dadurch gekennzeichnet, dass** man die Polymerisation in Gegenwart mindestens eines Halbacetals oder Vollacetals durchführt, welches durch Protonensäure-katalysierte Umsetzung wenigstens eines C₁- bis C₁₂-Hydrocarbylalkohols mit wenigstens einem Aldehyd oder Keton mit 1 bis 6 Kohlenstoffatomen erhältlich ist.

2. Verfahren nach Anspruch 1, **dadurch gekennzeichnet, dass** man das mindestens eine Halbacetal oder Vollacetal in einer Menge von 10 bis 5000 Gew.-ppm, bezogen auf das bei der Polymerisation eingesetzte Isobuten, verwendet.

3. Verfahren nach Anspruch 1 oder 2, **dadurch gekennzeichnet, dass** man die Polymerisation in Gegenwart mindestens eines Halbacetals oder Vollacetals durchführt, welches durch Protonensäure-katalysierte Umsetzung wenigstens eines linearen C₁- bis C₆-Alkanols mit wenigstens einem Aldehyd mit 1 bis 4 Kohlenstoffatomen erhältlich ist.

4. Verfahren nach einem der vorstehenden Ansprüche, **dadurch gekennzeichnet, daß** es sich bei dem Bortrihalogenid enthaltenden Komplex um Bortrifluorid-Etherate oder Bortrifluorid-Alkohol-Komplexe handelt.

5. Verfahren nach einem der Ansprüche 1 bis 3, **dadurch gekennzeichnet, daß** es sich bei dem Bortrihalogenid enthaltenden Komplex um Bortrifluorid-Diethyletherat oder Bortrifluorid-C₁- bis C₄-Alkanol-Komplexe handelt.

6. Verwendung von Halbacetalen oder Vollacetalen, welche durch Protonensäure-katalysierte Umsetzung wenigstens eines C₁- bis C₁₂-Hydrocarbylalkohols mit wenigstens einem Aldehyd oder Keton mit 1 bis 6 Kohlenstoffatomen erhältlich sind, bei der Polymerisation von Isobuten oder eines Isobuten enthaltenden Monomerengemisches in Gegenwart eines Bortrihalogenid oder eines ein Bortrihalogenid enthaltenden Komplexes als Polymerisationskatalysator zur Verbesserung der Produktqualität der erhaltenen Isobutenhomo- oder -copolymere mit einem zahlenmittleren Molekulargewicht von 500 bis 5.000.000.

7. Verwendung nach Anspruch 6 zur Verringerung der Verfärbungsneigung der erhaltenen Isobutenhomo- oder -copolymere.

## Claims

1. A process for preparing isobutene homopolymers or copolymers having a number average molecular weight of from 500 to 5 000 000 by polymerization of isobutene or an isobutene-comprising monomer mixture in the presence of a boron trihalide or a complex comprising a boron trihalide as polymerization catalyst, wherein the polymerization is carried out in the presence of at least one hemiacetal or full acetal which can be obtained by protic acid-catalyzed reaction of at least one C₁-C₁₂-hydrocarbyl alcohol with at least one aldehyde or ketone having from 1 to 6 carbon atoms.

2. The process according to claim 1, wherein the at least one hemiacetal or full acetal is used in an amount of from 10 to 5000 ppm by weight, based on the isobutene used in the polymerization.

3. The process according to claim 1 or 2, wherein the polymerization is carried out in the presence of at least one hemiacetal or full acetal which can be obtained by protic acid-catalyzed reaction of at least one linear C₁-C₆-alkanol with at least one aldehyde having from 1 to 4 carbon atoms.

4. The process according to any one of the preceding claims, wherein the complex comprising boron trihalide comprises boron trifluoride etherates or boron trifluoride alcohol complexes.

5. The process according to any one of claims 1 to 3, wherein the complex comprising boron trihalide comprises boron trifluoride diethyl etherate or boron trifluoride C₁-C₄-alkanol complexes.

6. The use of hemiacetals or full acetals which can be obtained by protic-acid catalyzed reaction of at least one C₁-C₁₂-hydrocarbyl alcohol with at least one aldehyde or ketone having from 1 to 6 carbon atoms in the polymerization of isobutene or an isobutene-comprising monomer mixture in the presence of a boron trihalide or a complex comprising a boron trihalide as polymerization catalyst in order to improve the product quality of the resulting isobutene homopolymers or copolymers having a number average molecular weight of from 500 to 5 000 000.

7. The use according to claim 6 for reducing the tendency of the isobutene homopolymers or copolymers obtained to discolor.

## Revendications

1. Procédé de fabrication d'homo- ou de copolymères d'isobutène ayant un poids moléculaire moyen en nombre de 500 à 5 000 000 par polymérisation d'isobutène ou d'un mélange de monomères contenant de l'isobutène en présence d'un trihalogénure de bore ou d'un complexe contenant un trihalogénure de bore en tant que catalyseur de polymérisation, **caractérisé en ce que** la polymérisation est réalisée en présence d'au moins un demi-acétal ou d'un acétal entier, qui peut être obtenu par réaction catalysée par un acide protonique d'au moins un alcool hydrocarbylique en C₁ à C₁₂ avec au moins un aldéhyde ou une cétone contenant 1 à 6 atomes de carbone.

2. Procédé selon la revendication 1, **caractérisé en ce que** ledit au moins un demi-acétal ou acétal entier est utilisé en une quantité de 10 à 5 000 ppm en poids, par rapport à l'isobutène utilisé lors de la polymérisation.

3. Procédé selon la revendication 1 ou 2, **caractérisé en ce que** la polymérisation est réalisée en présence d'au moins un demi-acétal ou acétal entier, qui peut être obtenu par réaction catalysée par un acide protonique d'au moins un alcanol linéaire en C₁ à C₆ avec au moins un aldéhyde contenant 1 à 4 atomes de carbone.

4. Procédé selon l'une quelconque des revendications précédentes, **caractérisé en ce que** le complexe contenant un trihalogénure de bore consiste en des trifluorure de bore-éthérates ou des complexes trifluorure de bore-alcool.

5. Procédé selon l'une quelconque des revendications 1 à 3, **caractérisé en ce que** le complexe contenant un trihalogénure de bore consiste en du trifluorure de bore-éthérate de diéthyle ou en des complexes trifluorure de bore-alcanol en C₁ à C₄.

6. Utilisation de semi-acétals ou d'acétals entiers, qui peuvent être obtenus par réaction catalysée par un acide protonique d'au moins un alcool hydrocarbylique en C₁ à C₁₂ avec au moins un aldéhyde ou une cétone contenant 1 à 6 atomes de carbone, lors de la polymérisation d'isobutène ou d'un mélange de monomères contenant de l'isobutène en présence d'un trihalogénure de bore ou d'un complexe contenant un trihalogénure de bore en tant que catalyseur de polymérisation, pour améliorer la qualité de produit des homo- ou copolymères d'isobutène obtenus ayant un poids moléculaire moyen en nombre de 500 à 5 000 000.

7. Utilisation selon la revendication 6 pour réduire la tendance à la coloration des homo- ou copolymères d'isobutène obtenus.
